# EUROPÄISCHE PATENTSCHRIFT

(11) **EP 1 014 684 B1**
(45) Veröffentlichungstag und Bekanntmachung des Hinweises auf die Patenterteilung: **27.02.2008**
(21) Anmeldenummer: 99124738.8
(22) Anmeldetag: 13.12.1999
(51) Int. Cl.: H04N 1/191

(54) **Vorrichtung und Verfahren zum Auslesen von in einer Phosphorschicht abgespeicherten Informationen**
Apparatus and method for reading on a phosphorlayer stored data
Appareil et méthode pour lire des données enregistrées dans une couche de phosphore

(30) Priorität: 23.12.1998 DE 19859747
(43) Veröffentlichungstag der Anmeldung: 28.06.2000
(73) Patentinhaber: Agfa-Gevaert HealthCare GmbH, 51373 Leverkusen (DE)
(72) Erfinder: Gebele, Herbert, 82054 Sauerlach (DE); Leblans, Paul, Dr., 2550 Kontich (BE); Müller, Jürgen, 81545 München (DE); Thoma, Ralph, Dr., 86167 Augsburg (DE)

(56) Entgegenhaltungen:
- EP-A- 0 863 657
- US-A- 4 922 103
- US-A- 4 953 038

## Beschreibung

Die vorliegende Erfindung betrifft eine Vorrichtung und ein Verfahren zum Auslesen von in einer Phosphorschicht abgespeicherten Informationen gemäß dem Oberbegriff des Anspruchs 1 bzw. 13.

Insbesondere für medizinische Zwecke wird von einem Objekt, beispielsweise einem Patienten, mittels einer Röntgenbestrahlung ein Bild erzeugt, das in einer Phosphorschicht als latentes Bild abgespeichert wird. Zum Auslesen des in der Phosphorschicht abgespeicherten Röntgenstrahlenbildes wird die Phosphorschicht mittels einer Strahlungsquelle angeregt. Sie emittiert aufgrund dieser Anregung Licht, das eine Intensität entsprechend des in der Phosphorschicht abgespeicherten Röntgenstrahlungsbildes aufweist. Das von der Phosphorschicht ausgesandte Licht wird von einem Empfangsmittel empfangen, so daß das in der Phosphorschicht abgespeicherte Röntgenstrahlungsbild anschließend sichtbar gemacht werden kann. Das Röntgenstrahlungsbild kann beispielsweise direkt auf einem Monitor dargestellt werden. Es ist aber auch möglich, das Röntgenstrahlungsbild auf einen speziell für Röntgenbilder hergestellten fotografischen Röntgenfilm zu schreiben.

Die Phosphorschichten sind üblicherweise auf einem Trägermaterial aufgebracht, das entweder transparent oder reflektierend sein kann. Bei einem reflektierenden Trägermaterial sind sowohl die Strahlungsquelle als auch das Empfangsmittel auf ein und derselben Seite des Trägermaterials angeordnet, nämlich auf derjenigen Seite des Trägermaterials, auf der die Phosphorschicht angebracht ist.

Ist die Phosphorschicht auf einem transparenten Trägermaterial angeordnet, so befindet sich die Strahlungsquelle auf der einen Seite des Trägermaterials und das Empfangsmittel auf der gegenüberliegenden anderen Seite des Trägermaterials. Diese Anordnung hat insbesondere den Vorteil, daß eine größere Menge von der angeregten Phosphorschicht ausgesandter Emissionsstrahlung von dem Empfangsmittel aufgefangen werden kann. Es ist daher eine bessere Qualität bei der Wiedergabe des in der Phosphorschicht abgespeicherten Röntgenstrahlungsbildes möglich.

Eine Vorrichtung zum Auslesen einer Phosphorschicht, die auf einem transparenten Trägermaterial angeordnet ist, ist aus der Patentschrift US 4,953,038 bekannt. Bei dieser bekannten Vorrichtung ist auf derjenigen Seite des transparenten Trägermaterials, auf der keine Phosphorschicht aufgebracht ist, eine Lichtquelle angebracht, mit der eine Teilfläche der Phosphorschicht beleuchtet wird. Das Trägermaterial mitsamt der aufgebrachten Phosphorschicht wird entlang der Lichtquelle bewegt Durch die Lichtquelle wird jeweils eine Vielzahl von benachbarten Punkten der Phosphorschicht, die in Form eines zweidimensionalen Feldes angeordnet sind, gleichzeitig belichtet Damit wird die Phosphorschicht zum Emittieren von Licht angeregt. Das Emissionslicht der Phosphorschicht wird von einer Fiberoptik aufgefangen, die auf derjenigen Seite des Trägermaterials angeordnet ist, auf der die Phosphorschicht sitzt. Das von der Fiberoptik aufgesammelte Licht wird daraufhin einer Charge-Coupled-Device, CCD, zugeleitet. Mittels der CCD wird ein Abbild der in der Phosphorschicht abgespeicherten Informationen detektiert. Bei dieser Art des Auslesens von in der Phosphorschicht abgespeicherten Informationen besteht die Möglichkeit, daß das von der Strahlungsquelle zum Anregen der Phosphorschicht ausgesandte Licht ebenfalls von der Faseroptik aufgesammelt und der CCD zugeleitet wird. Dies würde dazu führen, daß das von der CCD detektierte Röntgenstrahlungsbild stark verrauscht ist. Um dies zu vermeiden, wird gemäß der US 4,953,038 vorgeschlagen, in den Strahlengang zwischen der Phosphorschicht und der CCD ein Filter anzuordnen, das all diejenigen Wellenlängen unterdrückt, die nicht zu der von der Phosphorschicht emittierten Strahlung gehören. Auf diese Weise wird erreicht, daß von der Strahlungsquelle ausgesandtes Licht nicht in die CCD gelangt. Ein solches Filter hat allerdings den Nachteil, daß es relativ dick ist. Typischerweise beträgt die Dicke eines solchen Filters mindestens 0,3 mm. Auf seinem Weg durch das Filter wird das von der Phosphorschicht emittierte Licht gestreut. Dies führt dazu, daß die CCD das aufgesammelte Licht nicht ortsgetreu detektiert oder sogar von der Phosphorschicht emittierte Strahlung durch das Filter "verloren geht" und nicht von der CCD detektiert werden kann. Verzerrungen und eine schlechte Qualität der Darstellung sind bei der Sichtbarmachung des Röntgenstrahlungsbildes die Folge.

Der vorliegenden Erfindung liegt daher die Aufgabe zugrunde, eine Vorrichtung und ein Verfahren zum Auslesen von in einer Phosphorschicht abgespeicherten Informationen anzugeben, so daß eine gute Qualität bei der Wiedergabe der Informationen ermöglicht werden kann.

Diese Aufgabe wird durch die technische Lehren der Ansprüche 1 oder 13 gelöst.

Erfindungsgemäß wird wenigstens ein Teil der zum Anregen der Phosphorschicht verwendeten Anregungsstrahlung, reflektiert Dazu soll in dem Strahlengang zwischen Strahlungsquelle und Empfangsmittel eine Reflexionsschicht für die Anregungsstrahlung angeordnet sein. Solche Reflexionsschichten sind üblicherweise λ/4 dick und damit im Vergleich zu den bekannten Filterschichten sehr dünn. Mit λ ist hier die Wellenlänge der Anregungsstrahlung bezeichnet, die mit der Reflexionsschicht hauptsächlich reflektiert werden soll. Die Ausgestaltung der Reflexionsschicht hängt von der Charakteristik des Spektrums der Anregungsstrahlung und der zu reflektieren beabsichtigten Wellenlänge ab. Die Reflexionsschicht kann spezifisch für eine bestimmte Anwendung hergestellt werden. Es ist auch möglich, mehrere Reflexionsschichten, die eventuell auf unterschiedliche, zu reflektierende Wellenlängen ausgelegt sind, in dem Strahlengang zwischen Strahlungsquelle und Empfangsmittel anzuordnen. Die Reflexionsschichten ansich sind bekannt und werden vorteilhafterweise als sogenannte dünne Schichten hergestellt. Sie sind beispielsweise in dem Optik-Fachbuch "Contemporary Optics for Scientists and Engineers", Ellen Nussbaum at all, Prentice Hall, Inc., Englewood Cliffs, New Jersey, 1976, Seiten 182 bis 198 oder in dem Fachbuch "Technische Optik", Prof. Gottfried Schröder, Vogelbuch-Verlag Würzburg, 6. Auflage, Seiten 108 bis 110, beschrieben.

Die Reflexionsschicht muß nicht notwendigerweise so ausgestaltet sein, daß die gesamte, von der Strahlungsquelle ausgesandte Anregungsstrahlung vollständig reflektiert wird. Es ist beispielsweise auch möglich, die Reflexionsschicht auf bestimmte Wellenlängenbereiche der Anregungsstrahlung auszurichten. So können z. B. Wellenlängenbereiche aus dem infraroten Spektralbereich, die nicht zum Anregen der Phosphorschicht beitragen, bereits vor dem Auftreffen der Anregungsstrahlung auf die Phosphorschicht aus der Anregungsstrahlung herausreflektiert werden.

Weiterhin ist es möglich, zusätzlich zu einer Reflexionsschicht ein Filter zum Absorbieren der Anregungsstrahlung, wie es aus der US 4,953,038 bekannt ist, in dem Strahlengang zwischen Phosphorschicht und einem Abbildungsmittel, wie z. B. einer Fiberoptik, zum Abbilden der von der Phosphorschicht emittierten Strahlung anzuordnen. Eine solche Anordnung ist gegenüber der US 4,953,038 deshalb vorteilhaft, da die Filterschicht dünner ausgestaltet werden kann, so daß mehr von der Phosphorschicht emittierte Strahlung aufgesammelt und auf das Empfangsmittel abgebildet werden kann. Aufgrund der damit einhergehenden geringeren Streuung der Emissionsstrahlung wird ein qualitativ besseres, insbesondere schärfeverbessertes, Bild bei der Darstellung erhalten.

In einer vorteilhaften Ausgestaltung der Erfindung hat die Phosphorschicht einen speziellen Phosphor, der eine spezielle kristallite, nadelförmige Struktur aufweist. Eine solcher Phosphor ist beispielsweise aus der europäischen Patentanmeldung EP 0 751 200 A1 bekannt. Dieser spezielle Phosphor weist eine Vielzahl von "Nadeln" auf, die zum Führen sowohl der Anregungs- als auch der Emissionsstrahlung dienen. Für einen solchen Phosphor werden kristalline "Nadeln" gezüchtet, die eine Grundfläche von ca. 1 bis 25 µm² und eine Höhe aufweisen, die der gewünschten Schichtdicke der Phosphorschicht entspricht. Eine senkrecht einfallende Anregungsstrahlung wird in jeder "Nadel" weitgehend ohne Streuung weitergeleitet, bis sie im Kristallgitter ein Farbzentrum trifft, in dem Information abgespeichert ist Die durch die Anregung des Farbzentrums entstehende Emissionsstrahlung wird in der entsprechenden "Nadel" weitergeleitet Abhängig vom Brechungsindex zwischen den "Nadeln" wird die jeweilige Emissionsstrahlung reflektiert und aus der "Nadel" herausgeleitet. Durch die Verwendung dieses speziellen Phosphors wird daher eine Streuung der Anregungsstrahlung innerhalb des Phosphorträgers vermieden. Insbesondere bei einem zeilenweisen Auslesen der in der Phosporschicht abgespeicherten Informationen ist die Streuung der Anregungsstrahlung quer zur Zeilenrichtung nachteilig, da dann Farbzentren angeregt werden, die zu einer anderen als der gerade auszulesenden Zeile der Phosphorschicht gehören. Dadurch kann Emissionsstrahlung "verloren gehen", d. h. sie kann nicht von dem Empfangsmittel detektiert werden. Es wird des weiteren eine Streuung der Emissionsstrahlung innerhalb des Phosphorträgers vermieden, wodurch vor allem eine gute Ortsauflösung bei der Detektion der Emissionsstrahlung in dem Empfangsmittel erreicht wird.

In Verbindung mit der Reflexionsschicht wird durch den transparenten Träger und die Phosphorschicht hindurchgehende Anregungsstrahlung von der Reflexionsschicht, die zwischen Phosphorschicht und Empfangsmittel angeordnet ist, reflektiert und erneut in die Phosphorschicht hineingeleitet. Dabei werden die in der Phosphorschicht vorhandenen Farbzentren erneut zum Emittieren von Strahlung angeregt. Auf diese Weise kann mehr Emissionsstrahlung aus der Phosphorschicht ausgegeben und von dem Empfangsmittel detektiert werden. Dadurch ist eine Verbesserung der Qualität, insbesondere der Schärfe, der Wiedergabe der Informationen gewährleistet.

In einer weiteren besonders vorteilhaften Ausgestaltung der Erfindung ist zwischen der Strahlungsquelle und der Phosphorschicht eine Reflexionsschicht zum Reflektieren der von der Phosphorschicht ausgesandten Emissionsstrahlung angeordnet. Auf diese Weise wird die von der Phosphorschicht in die dem Empfangsmittel abgewandte Seite der Phosphorschicht ausgestrahlte Emissionsstrahlung in Richtung des Empfangsmittels reflektiert. Diese Strahlung kann daher ebenfalls von dem Empfangsmittel detektiert werden und trägt somit zur verbesserten Wiedergabe der Informationen bei.

Weitere vorteilhafte Ausgestaltungen der Erfindung können den abhängigen Patentansprüchen entnommen werden.

Im folgenden werden die Erfindung und ihre Vorteile anhand von Ausführungsbeispielen und den Zeichnungen beschrieben.

Es zeigen:
- Fig. 1: eine perspektivische Schemadarstellung eines ersten Ausführungsbeispiels einer erfindungsgemäßen Auslesevorrichtung zum Auslesen von in einer Phosphorschicht abgespeicherten Informationen,
- Fig. 2: eine detailliertere Schemadarstellung der erfindungsgemäßen Vorrichtung gemäß des ersten Ausführungsbeispiels in eine Zeilenrichtung und
- Fig. 3: eine Schemadarstellung eines zweiten Ausführungsbeispiels der erfindungsgemäßen Vorrichtung in Zeilenrichtung.

Im folgenden werden für gleiche oder gleichwirkende Elemente der verschiedenen Ausführungsbeispiele durchweg gleiche Bezugszeichen verwendet.

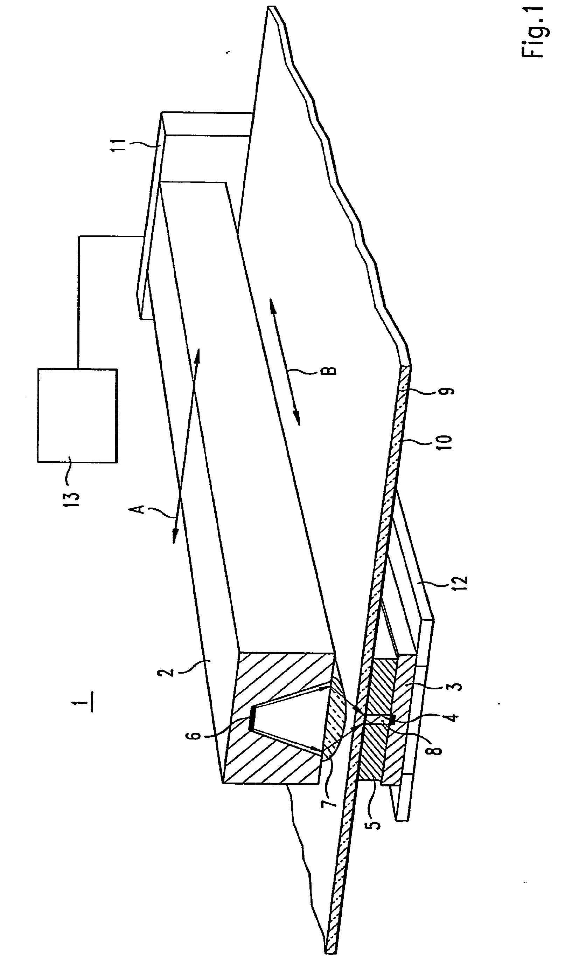

Figur 1 zeigt eine perspektivische Schemadarstellung des ersten Ausführungsbeispiels der erfindungsgemäßen Vorrichtung zum Auslesen von in einer Phosphorschicht abgespeicherten Informationen. Eine Auslesevorrichtung 1 wird dazu verwendet, eine Bildinformation aus einer Phosphorschicht 10 auszulesen. Diese Bildinformation wurde mittels Röntgenbestrahlung in der Phosphorschicht 10 erzeugt. Die Auslesevorrichtung 1 weist eine Strahlungsquelle 2 auf, die hier als Linienlichtquelle ausgestaltet ist und eine Vielzahl von nebeneinander angeordneten Laserdioden enthält. Die Linienlichtquelle 2 enthält hier 4096 parallel in einer Linie nebeneinander angeordnete Laserdioden. Mit diesen Laserdioden kann eine einzige Zeile der Phosphorschicht 10 angeregt werden. Stellvertretend ist in der Figur 1 eine der Laserdioden 6 dargestellt. Die Laserdioden der Linienlichtquelle 2 sind senkrecht auf die Phosphorschicht 10 ausgerichtet, so daß die von den einzelnen Laserdioden ausgesandte Strahlung direkt auf die Phosphorschicht 10 trifft. Die Linienlichtquelle 2 erstreckt sich im wesentlichen über eine gesamte Breite B, über die Information in der Phosphorschicht 10 abgespeichert werden kann. Anstelle der mit Laserdioden ausgestalteten Linienlichtquelle 6 kann ebenso eine andere Strahlungsquelle verwendet werden, die zum Anregen der Phosphorschicht 10 geeignet ist. Beispielsweise kann auch eine sogenannte "Flying Spot" Strahlungsquelle verwendet werden, bei der ein von einem Laser ausgegebener Laserstrahl auf einen drehbar gelagerten Polygonspiegel gerichtet ist. Der Polygonspiegel rotiert, so daß der Laserstrahl über eine Zeile der Phosphorschicht geführt wird, wobei jeweils immer ein einziger Punkt der Zeile angeregt wird.

Die Phosphorschicht 10 ist auf ein transparentes Trägermaterial 9 aufgebracht. Zwischen dem transparenten Trägermaterial 9 und der Linienlichtquelle 2 ist über die gesamte Breite der Linienlichtquelle 2 eine Fokussierlinse 7 angebracht. Mit dieser Fokussierlinse 7 wird die von der Linienlichtquelle 2 ausgesandte Strahlung auf die Phosphorschicht 10 fokussiert, so daß eine Zeile der Phosphorschicht 10 gleichzeitig angeregt werden kann.

Die Auslesevorrichtung 1 enthält des weiteren ein Empfangsmittel 3, das hier als sogenannte "Charge-Coupled-Device" (CCD)-Zeile ausgestaltet ist und zum Empfangen einer von der Phosphorschicht ausgesandten Emissionsstrahlung dient Diese CCD-Zeile 3 weist eine Vielzahl von parallel in einer Linie nebeneinander angeordneten Fotodektoren auf. Stellvertretend ist in der Figur 1 ein Fotodetektor 4 dargestellt. Mit diesen Fotodetektoren kann eine fotoelektrische Wandlung einer empfangenen Lichtstrahlung durchgeführt werden. Die einzelnen Fotodetektoren stellen Punktelemente des Empfangsmittels 3 dar. Jeder Fotodetektor kann eine von einem der angeregten Punkte der Phosphorschicht 10 ausgesandte Lichtstrahlung empfangen. Im vorliegenden Ausführungsbeispiel gemäß der Figur 1 sind in der CCD-Zeile 3 4096 einzelne Fotodetektoren vorgesehen.

Zwischen der Phosphorschicht 10 und der CCD-Zeile 3 ist eine Fiberoptik 5 angebracht, die sich über die gesamte Breite der CCD-Zeile erstreckt. Die Fiberoptik 5 besteht aus einer Vielzahl von parallel nebeneinander angeordneten Lichtwellenleitern, die die von den einzelnen angeregten Punkten der Phosphorschicht 10 ausgesandte Strahlung erfassen und den einzelnen Fotodetektoren der CCD-Zeile 3 zuführen. Stellvertretend für die einzelnen als Lichtwellenleiter dienenden Fiberoptikfasern ist in der Figur 1 eine der Fiberoptikfasern mit dem Bezugszeichen 8 dargestellt. Solche Fiberoptiken sind hinlänglich bekannt und können beispielsweise als sogenannte "fused fiber optic faceplates" von der Firma Schott bezogen werden. An Stelle der Fiberoptik 5 können auch andere Abbildungsmittel, wie beispielsweise ein sogenanntes Selfoclinsen-Array oder eine Anordnung mit Mikrolinsen, verwendet werden.

Die CCD-Zeile 3 und die auf ihr angebrachte Fiberoptik 5 sind auf einer Grundplatte 12 befestigt. An einer Seite des transparenten Trägermaterials 9 ist ein Verbindungselement 11 vorgesehen, das die Linienlichtquelle 2 und die Grundplatte 12 samt der darauf befindlichen CCD-Zeile 3 und der Fiberoptik 5 fest miteinander verbindet. Dadurch wird eine feste Verbindung zwischen Linienlichtquelle 2 und CCD-Zeile 3 erreicht, so daß die Abbildung der gespeicherten Bildinformationen, d. h. Anregung des Phosphors und Empfang der emittierten Strahlung, genau aufeinander abgestimmt sind und auch während des eigentlichen Auslesevorgangs immer eine exakte Zuordnung gewährleistet ist Über ein Antriebsmittel 13, das beispielsweise ein Schritt- oder Linearmotor sein kann, ist die gesamte Anordnung zum Auslesen der in der Phosphorschicht 10 abgespeicherten Informationen in eine Verschiebungsrichtung A bewegbar. Dadurch kann ein Vorschub erzeugt werden, um die gesamte Phosphorschicht 10 mittels des zeilenweisen Anregens und Detektierens auslesen zu können.

Erfindungsgemäß ist nun in dem Strahlengang zwischen der Linienlichtquelle 2 und der CCD-Zeile 3 eine Reflexionsschicht zum Reflektieren von Anregungsstrahlung, die von der Linienlichtquelle 2 ausgegeben wird, angeordnet.

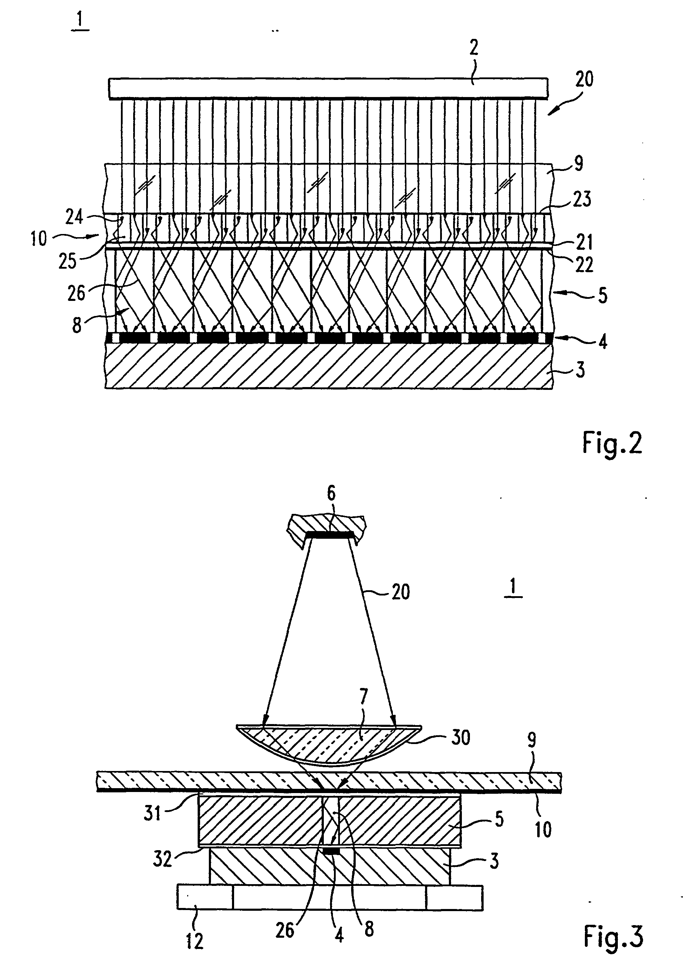

Figur 2 zeigt eine detalliertere Schemaansicht der erfindungsgemäßen Vorrichtung gemäß dem ersten Ausführungsbeispiel. Die Figur 2 zeigt die erfindungsgemäße Auslesevorrichtung 1 in Zeilenrichtung B. Die Linienlichtquelle 2 emittiert dabei eine Stimulationsstrahlung 20, die durch den transparenten Träger 9 in die Phosphorschicht 10 eindringt. Trifft diese Emissionsstrahlung in der Phosphorschicht auf ein Farbzentrum, in dem Bildinformation abgespeichert ist, so wird dieses Farbzentrum zum Emittieren von Licht angeregt. In der Figur 2 sind solche Farbzentren in der Phosphorschicht 10 beispielhaft mit einer Pfeilspitze und dem Bezugszeichen 24 dargestellt. Die von der Phosphorschicht 10 ausgegebene Emissionsstrahlung wird von der Fiberoptik 5 aufgefangen. Stellvertretend sind mehrere Fiberoptikfasern, die als Lichtwellenleiter dienen, in der Figur 2 dargestellt, von denen eine das Bezugszeichen 8 hat. Die Emissionsstrahlung, die von der Phosphorschicht ausgegeben wird, ist hier mit dem Bezugszeichen 26 angegeben. Die Fiberoptik 5 ist direkt auf die CCD-Zeile 3 aufgesetzt, die wiederum die einzelnen Fotodetektoren 4 enthält. Jedem Fotodetektor 4 ist dabei eine Fiberoptikfaser zugeordnet Das von der Fiberoptik 5 aufgesammelte Licht wird daher der CCD-Zeile 3 zugeleitet.

Die Phosphorschicht 10 ist hier mit einer nadelförmigen Kristallitstruktur versehen. Dies ist in der Figur 2 dadurch angedeutet, daß eine Vielzahl von parallel nebeneinander angeordneten Rechtecken in der Phosphorschicht eingezeichnet sind. Jedes solches Rechteck stellt einen nadelförmigen Kristallit dar. Beispielhaft ist in der Figur 2 ein solcher nadelförmiger Kristallit mit dem Bezugszeichen 25 bezeichnet. Wie bereits oben beschrieben, kann die senkrecht einfallende Stimulationsstrahlung 20 von diesen nadelförmigen Kristallitstrukturen weitgehend ohne Streuung zu einem Farbzentrum weitergeleitet werden und die von diesem Farbzentrum, nach der Anregung durch die Stimulationsstrahlung, ausgegebene Emissionsstrahlung 26 ebenfalls weitgehend ohne Streuung aus der Phosphorschicht ausgegeben werden. Die Verwendung eines solchen Phospors ist allerdings für die vorliegende Erfindung nicht notwendig, sondern vorteilhaft. Es ist auch möglich, die Erfindung mit einem herkömmlichen Phosphor ohne nadelförmige Kristallitstruktur einzusetzen.

Erfindungsgemäß ist nun zwischen der Phosphorschicht 10 und der Fiberoptik 5 eine erste Reflexionsschicht 21 und dazu parallel zusätzlich eine zweite Reflexionsschicht 22 für die Stimulationsstrahlung 20 angeordnet. Mit diesen beiden Reflexionsschichten 21 und 22 wird die durch das transparente Trägermaterial 9 und die Phosphorschicht 10 hindurchgehende Stimulationsstrahlung 20 erneut in die Phosphorschicht 10 zurückreflektiert. Die so reflektierte Stimulationsstrahlung regt daher erneut Farbzentren der Phosphorschicht 10 an. Dadurch wird von der Phosphorschicht 10 eine erhöhte Emissionsstrahlung emittiert, die dementsprechend ebenfalls von der CCD-Zeile 3 detektiert wird. Dadurch kann vorteilhafterweise die Qualität bei der Wiedergabe des Röntgenbildes weiter erhöht werden. Die Reflexionsschichten 21 und 22 sind sogenannte λ/4-Schichten, die sehr dünn ausgestaltet werden können. Dadurch kann die Fiberoptik 5 sehr nah an der Phosphorschicht 10 angeordnet sein. Dadurch wird erreicht, daß eine Streuung von Phosphoremissionsstrahlung beim Austritt aus der Phosphorschicht weitestgehend vermieden werden kann. Der Großteil der von der Phosphorschicht 10 emittierten Emissionsstrahlung wird daher von der Fiberoptik 5 aufgesammelt. Auch dies führt zu einer Verbesserung bei der Wiedergabe des Röntgenbildes.

In dem Ausführungsbeispiel gemäß der Figur 2 sind zwei Reflexionsschichten 21 und 22 zwischen Phosphorschicht 10 und Fiberoptik 5 angebracht. Aus technologisch-physikalischen Gründen kann eine solche Reflexionsschicht 21 bzw. 22 heute nur eine bestimmte maximale Intensität der auf sie treffenden Stimulationsstrahlung 20 reflektieren. Dies bedeutet, daß die für das Anregen der Phosphorschicht 10 notwendige Intensität der Emissionsstrahlung 20 nur sehr bedingt durch eine einzige Reflexionsschicht reflektiert werden kann. Ein Teil der Stimulationsstrahlung 20 könnte daher weiterhin die erste Reflexionsschicht 21 durchdringen und würde ebenfalls von der CCD-Zeile 3 detektiert werden, sofern nicht die zweite Reflexionsschicht 22 vorgesehen wäre, die dazu dient, von der ersten Reflexionsschicht 21 durchgelassene Stimulationsstrahlung 20 zu reflektieren. Es ist allerdings ebenso denkbar, nur eine einzige oder aber auch noch weitere als die zwei dargestellten Reflexionsschichten 21 und 22 in der erfindungsgemäßen Auslesevorrichtung vorzusehen. Dies führt zu einer entsprechenden Verschlechterung bzw. Verbesserung der Bildwiedergabequalität. Die Detektion von Stimulationsstrahlung durch die CCD-Zeile 3 führt zu einem Rauschen bei der Wiedergabe des Röntgenbildes.

In dem Ausführungsbeispiel der erfindungsgemäßen Auslesevorrichtung 1 gemäß der Figur 2 ist auf der Oberseite der Phosphorschicht 10, das heißt zwischen dem transparenten Trägermaterial 9 und der Phosphorschicht 10 eine weitere Reflexionsschicht 23 angebracht, die die von der Phosphorschicht 10 emittierte Emissionsstrahlung, die in Richtung der Linienlichtquelle 2 ausgegeben wird, reflektiert. Die so in Richtung der Linienlichtquelle 2 ausgesandte Emissionsstrahlung wird daher an der weiteren Reflexionsschicht 23 reflektiert und in die Phosphorschicht 10 zurückgerichtet. Auf diese Weise wird die Menge der von der CCD-Zeile 3 detektierten Emissionsstrahlung weiter erhöht, was ebenfalls zu einer besseren Bilddarstellungsqualität führt.

Reflexionsschichten, die zum Reflektieren der Stimulationsstrahlung 20 dienen, können ebenfalls an anderen Stellen der erfindungsgemäßen Auslesevorrichtung angebracht sein. Es ist nicht notwendigerweise so, daß solche Reflexionsschichten zwischen der Phosphorschicht 10 und der Fiberoptik 5 angebracht sein müssen, wie dies bei dem Ausführungsbeispiel gemäß der Figur 2 dargestellt ist. Figur 3 zeigt eine Schemaansicht eines zweiten Ausführungsbeispiels der erfindungsgemäßen Auslesevorrichtung. Die Auslesevorrichtung 1 ist dabei in Zeilenrichtung dargestellt. Beispielhaft ist hier eine der Laserdioden 6 dargestellt, deren Laserstrahlung 20 von der Fokussierlinse 20 durch den transparenten Träger 9 auf die Phosphorschicht 10 fokussiert wird. Wie bereits oben beschrieben emittiert die Phosphorschicht 10 aufgrund der Stimulationsstrahlung eine Emissionsstrahlung, die über die Fiberoptik 5 der CCD-Zeile 3 zugeführt wird. Beispielhaft ist in der Figur 3 eine der Fiberoptikfasern 8 der Fiberoptik 5 dargestellt. Die von der Phosphorschicht ausgegebene Emissionsstrahlung 26 wird dabei durch diese Fiberoptikfaser 8 einem Fotodetektor 4 der CCD-Zeile 3 zugeführt. Dieser Fotodetektor 4 ist hier in der Figur 3 stellvertretend für die restlichen Fotodetektoren der CCD-Zeile 3 dargestellt.

In der Auslesevorrichtung 1 gemäß der Figur 3 ist zwischen der Phosphorschicht 10 und der Fiberoptik 5 eine Reflexionsschicht 31 für die Stimulationsstrahlung 20 angebracht. Zusätzlich zu dieser Reflexionsschicht 31 ist zwischen der Fiberoptik 5 und der CCD-Zeile 3 eine weitere Reflexionsschicht 32 für die Stimulationsstrahlung vorhanden. Die beiden Reflexionsschichten 31 und 32 erfüllen die gleiche Funktion wie die Reflexionsschichten 21 und 22 gemäß des Ausführungsbeispiels der Figur 2. Es ist auch möglich, anstelle der Reflexionsschicht 31, die zwischen Phosphorschicht 10 und Fiberoptik 5 angebracht ist, ausschließlich zwischen der Fiberoptik 5 und der CCD-Zeile 3 eine oder mehrere Reflexionsschichten anzubringen. Das Anbringen von Reflexionsschichten, wie der Reflexionsschicht 32, zwischen Fiberoptik 5 und CCD-Zeile 3 hat den Vorteil, daß die Anordnung der Reflexionsschicht an dieser Stelle technisch einfacher realisiert werden kann.

In dem zweiten Ausführungsbeispiel gemäß der Figur 3 ist weiterhin zwischen der Linienlichtquelle, beispielhaft dargestellt durch eine der Laserdioden 6, und der Phosphorschicht 10 eine wellenlängenselektive Reflexionsschicht 30 zum Reflektieren von bestimmten Wellenlängenbereichen der Stimulationsstrahlung 20 angebracht. Im vorliegenden zweiten Ausführungsbeispiel ist diese wellenlängenselektive Reflexionsschicht 30 an der Fokussierlinse 7 angeordnet. Es ist aber ebenso möglich, eine solche Reflexionsschicht an einer anderen Stelle zwischen der Linienlichtquelle und der Phosphorschicht 10 anzubringen. Es wurde festgestellt, daß die zum Stimulieren der Phosphorschicht 10 verwendete Linienlichtquelle, die eine Vielzahl von Laserdioden aufweist, neben dem zum Anregen der Phosphorschicht verwendbaren Wellenlängenbereichen ebenfalls einen sehr geringen Anteil im infraroten Wellenlängenbereich des Spektrums aufweist. Solche infraroten Wellenlängen sind nicht zum Anregen der Phosphorschicht verwendbar, sondern verändern vielmehr das Emissionsverhalten der Phosphorschicht auf schädliche Art und Weise. Es ist daher vorteilhaft, solche infraroten Wellenlängenbereiche nicht auf die Phosphorschicht 10 treffen zu lassen. Dies erfolgt auf technisch besonders einfache Art und Weise, indem eine solche wellenlängenselektive Reflexionsschicht 30 in den Strahlengang zwischen Linienlichtquelle und Phosphorschicht eingebracht wird.

## Patentansprüche

1. Vorrichtung (1) zum Auslesen von in einer Phosphorschicht (10) abgespeicherten Informationen mit
- einem transparenten Trägermaterial (9), auf das die auszulesende Phosphorschicht (10) aufgebracht ist,
- einer Strahlungsquelle (2) zum Aussenden einer Anregungsstrahlung (20) und
- einem Empfangsmittel (3) zum Empfangen einer von der Phosphorschicht (10) ausgesandten Emissionsstrahlung (26), wobei
- die Strahlungsquelle (2) auf der einen und das Empfangsmittel (3) auf der anderen Seite des Trägermaterials (9) angeordnet ist, wodurch ein Strahlengang zwischen Strahlungsquelle (2) und Empfangsmittel (3) festgelegt ist,
**dadurch gekennzeichnet, daß**
in dem Strahlengang zwischen Strahlungsquelle (2) und Empfangsmittel (3) eine Reflexionsschicht (21, 22; 30, 31, 32) zum Reflektieren wenigstens eines Teils der Anregungsstrahlung (20) angeordnet ist.

2. Vorrichtung nach Anspruch 1, **dadurch gekennzeichnet, daß** die Reflexionsschicht (21, 22; 31, 32) zwischen Phosphorschicht (10) und Empfangsmittel (3) angeordnet ist.

3. Vorrichtung nach Anspruch 1, **dadurch gekennzeichnet, daß** die die Reflexionsschicht (30) zwischen Strahlungsquelle (2) und Phosphorschicht (10) angeordnet und so ausgestaltet ist, daß sie einen Wellenlängenbereich der Anregungsstrahlung (20) reflektiert, der nicht zum Anregen der Phosphorschicht (10) dient.

4. Vorrichtung nach Anspruch 1, **dadurch gekennzeichnet, daß** sie wenigstens zwei Reflexionsschichten (21, 22; 30, 31, 32) aufweist, von denen die eine (21, 2; 31, 32) zwischen Phosphorschicht (10) und Empfangsmittel (3) und von denen die andere (31) zwischen Strahlungsquelle (2) und Phosphorschicht (10) angeordnet und so ausgestaltet ist, daß sie einen Wellenlängenbereich der Anregungsstrahlung (20) reflektiert, der nicht zum Anregen der Phosphorschicht (10) dient.

5. Vorrichtung nach einem der vorhergehenden Ansprüche, **dadurch gekennzeichnet, daß** das Trägermaterial (9) mit der Phosphorschicht (10) fest in der Vorrichtung (1) angeordnet ist.

6. Vorrichtung nach einem der vorhergehenden Ansprüche, **dadurch gekennzeichnet, daß** die Strahlungsquelle (2) auf der der Phosphorschicht (10) abgewandten Seite des Trägermaterials (9) und das Empfangsmittel (3) auf der der Phosphorschicht (10) zugewandten Seite des Trägermaterials (9) angeordnet ist und zwischen der Phosphorschicht (10) und dem Empfangsmittel (3) ein optisches Abbildungsmittel (5) vorgesehen ist, mit dem von der Phosphorschicht (10) ausgesandte Emissionsstrahlung (26) erfaßbar und auf das Empfangsmittel (3) abbildbar ist.

7. Vorrichtung nach Anspruch 6, **dadurch gekennzeichnet, daß** das Abbildungsmittel (5) Lichtwellenleiter aufweist.

8. Vorrichtung nach einem der vorhergehenden Ansprüche, **dadurch gekennzeichnet, daß** die Strahlungsquelle (2) eine Linienlichtquelle zum Anregen einer einzigen Zeile der Phosphorschicht (10) ist und das Empfangsmittel (3) eine Vielzahl von Punktelementen (4) zum punktweisen Empfangen von Emissionsstrahlung (26) aufweist, wobei von der angeregten Zeile der Phosphorschicht (10) ausgesandte Emissionsstrahlung (26) durch die Punktelemente (4) gleichzeitig empfangbar ist, so daß das Auslesen der Phosphorschicht (10) zeilenweise erfolgt.

9. Vorrichtung nach einem der vorhergehenden Ansprüche, **dadurch gekennzeichnet, daß** die Phosphorschicht (10) eine nadelförmige Kristallitstruktur hat.

10. Vorrichtung nach einem der Ansprüche 6 bis 9, **dadurch gekennzeichnet, daß** die Reflexionsschicht (32) zwischen dem Abbildungsmittel (5) und dem Empfangsmittel (3) angeordnet ist.

11. Vorrichtung nach einem der vorhergehenden Ansprüche, **dadurch gekennzeichnet, daß** zwischen Strahlungsquelle (2) und Phosphorschicht (10) eine weitere Reflexionsschicht (23) zum Reflektieren von von der Phosphorschicht (10) ausgesandter Emissionsstrahlung (26) angeordnet ist.

12. Vorrichtung nach einem der vorhergehenden Ansprüche, **dadurch gekennzeichnet, daß** die Strahlungsquelle (2) und das Empfangsmittel (3) starr miteinander verbunden sind und die Vorrichtung ein Antriebsmittel (13) aufweist, mit dem zwischen der Strahlungsquelle (2) und dem Empfangsmittel (3) einerseits und der Phosphorschicht (10) andererseits eine Relativbewegung in eine Transportrichtung (B) ausführbar ist.

13. Verfahren zum Auslesen von in einer Phosphorschicht (10) abgespeicherten Informationen, bei dem
- eine Anregungsstrahlung (20) in Richtung eines transparenten Trägermaterials (9) ausgesendet wird, auf das die auszulesende Phosphorschicht (10) aufgebracht ist,
- die Phosphorschicht (10) daraufhin eine Emissionsstrahlung (26) aussendet, und
- die von der Phosphorschicht (10) ausgesandten Emissionsstrahlung (26) empfangen wird,
wobei die Strahlungquelle (2) der Anregungsstrahlung (20) auf der einen und das Empfangsmittel (3) auf der anderen Seite des Trägermaterials (9) angeordnet, wodurch ein Strahlengang zwischen Strahlungsquelle (2) und Empfangsmittel (3) festgelegt ist,
**dadurch gekennzeichnet, daß** wenigstens ein Teil der Anregungsstrahlung (20) reflektiert wird.

## Claims

1. A device (1) for reading out information stored in a phosphor layer (10) comprising:
- a transparent carrier material (9) having applied thereto the phosphor layer (10) to be read out;
- a radiation source (2) for emitting an excitation radiation (20) ;
- a receiving means (3) for receiving an emission radiation (26) emitted by the phosphor layer (10);
- the radiation source (2) being arranged on one side of the carrier material (9) and the receiving means (3) being arranged on the other side of the carrier material (9), so that a beam path is defined between the radiation source (2) and the receiving means (3);
**characterised in that**
a reflective layer (21, 22; 30, 31, 32) is arranged in the beam path between the radiation source (2) and the receiving means (3) for reflecting at least a portion of the excitation radiation (20).

2. The device according to claim 1, wherein the reflective layer (21, 22; 31, 32) is arranged between the phosphor layer (10) and the receiving means (3).

3. The device according to claim 1, wherein the reflective layer (30) is arranged between the radiation source (2) and the phosphor layer (10) and is designed to reflect a wavelength range of the excitation radiation (20) which is not used to excite the phosphor layer (10).

4. The device according to claim 1, wherein the device has at least two reflective layers (21, 22; 30, 31, 32), one (21, 2; 31, 32) of them being arranged between the phosphor layer (10) and the receiving means (3) and the other (31) being arranged between the radiation source (2) and the phosphor layer (10) and being designed to reflect a wavelength range of the excitation radiation (20) which is not used to excite the phosphor layer (10).

5. The device according to any one of the preceding claims, wherein the carrier material (9) together with the phosphor layer (10) are fixedly arranged in the device (1).

6. The device according to any one of the preceding claims, wherein the radiation source (2) is arranged on the side of the carrier material (9) facing away from the phosphor layer (10) and the receiving means (3) is arranged on the side of the carrier material (9) facing towards the phosphor layer (10); and between the phosphor layer (10) and the receiving means (3) there is provided an optical imaging means (5) capable of capturing the emission radiation (26) emitted by the phosphor layer (10) and imaging said emission radiation (26) onto the receiving means (3).

7. The device according to claim 6, wherein the imaging means (5) comprises optical waveguides.

8. The device according to any one of the preceding claims, wherein the radiation source (2) is a linear light source for exciting a single line of the phosphor layer (10) and the receiving means (3) comprises a plurality of pixels (4) for point-by-point reception of the emission radiation (26); and wherein the emission radiation (26) emitted by the excited line of the phosphor layer (10) can be simultaneously received by the pixels (4), so that the phosphor layer (10) can be read out line by line.

9. The device according to any one of the preceding claims, wherein the phosphor layer (10) has a needle-shaped crystallite structure.

10. The device according to any of claims 6 to 9, wherein the reflective layer (32) is arranged between the imaging means (5) and the receiving means (3).

11. The device according to any one of the preceding claims, wherein an additional reflective layer (23) for reflecting emission radiation (26) emitted by the phosphor layer (10) is arranged between the radiation source (2) and the phosphor layer (10).

12. The device according to any one of the preceding claims, wherein the radiation source (2) and the receiving means (3) are rigidly connected with each other; and wherein the device further comprises a drive means (13) for providing a relative motion in a transport direction (B) between the radiation source (2) and the receiving means (3) on the one hand and the phosphor layer (10) on the other hand.

13. A method for reading out information stored in a phosphor layer (10), comprising the steps of
- providing for emission of an excitation radiation (20) in the direction of a transparent carrier material (9) having applied thereto the phosphor layer (10) to be read out;
- thereupon causing the phosphor layer (10) to emit an emission radiation, and
- receiving the emission radiation (26) emitted by the phosphor layer (10); the radiation source (2) of the excitation radiation (20) being arranged on one side of the carrier material (9) and the receiving means (3) being arranged on the other side of the carrier material (9), so that a beam path is defined between the radiation source (2) and the receiving means (3)
**characterised in that** at least a portion of the excitation radiation (20) is reflected.

## Revendications

1. Dispositif (1) de lecture d'informations mémorisées dans une couche à base de phosphore (10), comportant :
- une matière de support transparente (9), sur laquelle est appliquée la couche à base de phosphore (10) à lire,
- une source de rayonnement (2) pour l'émission d'un rayonnement de stimulation (20), et
- un moyen récepteur (3) pour la réception d'un rayonnement d'émission (26) émis par la couche à base de phosphore (10),
- la source de rayonnement (2) étant disposée sur une face de la matière de support (9) et le moyen récepteur (3) sur l'autre face, moyen par lequel une marche de rayons est définie entre la source de rayonnement (2) et le moyen récepteur (3),
**caractérisé en ce que**
une couche de réflexion (21, 22 ; 30, 31, 32), pour la réflexion d'une partie au moins du rayonnement de stimulation (20), est disposée dans la marche des rayons entre la source de rayonnement (2) et le moyen récepteur (3).

2. Dispositif selon la revendication 1, **caractérisé en ce que** la couche de réflexion (21, 22 ; 31, 32) est disposée entre la couche à base de phosphore (10) et le moyen récepteur (3).

3. Dispositif selon la revendication 1, **caractérisé en ce que** la couche de réflexion (30) est disposée entre la source de rayonnement (2) et la couche à base de phosphore (10), et est agencée de telle sorte qu'elle réfléchisse une plage de longueurs d'onde du rayonnement de stimulation (20), qui ne sert pas à la stimulation de la couche à base de phosphore (10).

4. Dispositif selon la revendication 1, **caractérisé en ce qu'**il comporte au moins deux couches de réflexion (21, 22 ; 30, 31, 32), dont l'une (21, 2 ; 31, 32) est disposée entre la couche à base de phosphore (10) et le moyen récepteur (3), et dont l'autre (31) est disposée entre la source de rayonnement (2) et la couche à base de phosphore (10), et est agencée de telle sorte qu'elle réfléchisse une plage de longueurs d'onde du rayonnement de stimulation (20), qui ne sert pas à la stimulation de la couche à base de phosphore (10).

5. Dispositif selon l'une des revendications précédentes, **caractérisé en ce que** la matière de support (9) avec la couche à base de phosphore (10) est disposée en fixe dans le dispositif (1).

6. Dispositif selon l'une des revendications précédentes, **caractérisé en ce que** la source de rayonnement (2) est disposée sur la face de la matière de support (9) opposée à la couche à base de phosphore (10), et le moyen récepteur (3) sur la face de la matière de support (9) orientée vers la couche à base de phosphore (10), et **en ce qu'**un moyen de reproduction optique (5) est prévu entre la couche à base de phosphore (10) et le moyen récepteur (3), avec lequel le rayonnement d'émission (26) émis par la couche à base de phosphore (10) peut être détecté et reproduit sur le moyen récepteur (3).

7. Dispositif selon la revendication 6, **caractérisé en ce que** le moyen de reproduction (5) comporte des guides d'ondes lumineuses.

8. Dispositif selon l'une des revendications précédentes, **caractérisé en ce que** la source de rayonnement (2) est une source de lumière de ligne pour la stimulation d'une seule ligne de la couche à base de phosphore (10), et **en ce que** le moyen récepteur (3) comporte une pluralité d'éléments ponctuels (4) pour la réception par points de rayonnement d'émission (26), du rayonnement d'émission (26) émis par la ligne stimulée de la couche à base de phosphore (10) pouvant être reçu simultanément par les éléments ponctuels (4), de sorte que la lecture de la couche à base de phosphore (10) soit effectuée par lignes.

9. Dispositif selon l'une des revendications précédentes, **caractérisé en ce que** la couche à base de phosphore (10) possède une structure à cristallites en forme d'aiguilles.

10. Dispositif selon l'une des revendications 6 à 9, **caractérisé en ce que** la couche de réflexion (32) est disposée entre le moyen de reproduction (5) et le moyen récepteur (3).

11. Dispositif selon l'une des revendications précédentes, **caractérisé en ce qu'**une autre couche de réflexion (23), pour la réflexion de rayonnement d'émission (26) émis par la couche à base de phosphore (10), est disposée entre la source de rayonnement (2) et la couche à base de phosphore (10).

12. Dispositif selon l'une des revendications précédentes, **caractérisé en ce que** la source de rayonnement (2) et le moyen récepteur (3) sont reliés rigidement entre eux, et **en ce que** le dispositif comporte un moyen d'entraînement (13) avec lequel un mouvement relatif dans un sens de transport (B) peut être effectué, entre la source de rayonnement (2) et le moyen récepteur (3) d'une part et la couche à base de phosphore (10) d'autre part.

13. Procédé de lecture d'informations mémorisées dans une couche à base de phosphore (10), dans lequel :
- un rayonnement de stimulation (20) est émis en direction d'une matière de support transparente (9), sur laquelle est appliquée la couche à base de phosphore (10) à lire,
- la couche à base de phosphore (10) émet ensuite un rayonnement d'émission (26), et
- le rayonnement d'émission (26) émis par la couche à base de phosphore (10) est réceptionné,
la source de rayonnement (2) du rayonnement de stimulation (20) étant disposée sur une face de la matière de support (9) et le moyen récepteur (3) sur l'autre face, moyen par lequel une marche de rayons est définie entre la source de rayonnement (2) et le moyen récepteur (3),
**caractérisé en ce qu'**au moins une partie du rayonnement de stimulation (20) est réfléchie.
